# EUROPEAN PATENT SPECIFICATION

(11) **EP 4 118 770 B1**
(45) Date of publication and mention of the grant of the patent: **20.05.2026**
(21) Application number: 20732816.2
(22) Date of filing: 10.06.2020
(51) Int. Cl.: H04L 1/1607, H04L 1/1825

(54) **DEVICE AND METHOD FOR LOW LATENCY WIRELESS TRANSMISSIONS**
VORRICHTUNG UND VERFAHREN FÜR DRAHTLOSE ÜBERTRAGUNGEN MIT NIEDRIGER LATENZ
DISPOSITIF ET PROCÉDÉ POUR TRANSMISSIONS SANS FIL À FAIBLE LATENCE

(43) Date of publication of application: 18.01.2023
(73) Proprietor: Huawei Technologies Co., Ltd., Shenzhen, Guangdong 518129 (CN)
(72) Inventor: SHILO, Shimon, 80992 Munich (DE); HENCINSKI, Oren, 80992 Munich (DE)
(74) Representative: Roth, Sebastian
(86) International application number: PCT/EP2020/066063
(87) International publication number: WO 2021/249635

(56) References cited:
- US-A1- 2007 234 186
- US-A1- 2014 293 868
- SAMSUNG: "NR 2-step random access procedure", vol. RAN WG1, no. Spokane, Wa; 20170116 - 20170120, 16 January 2017 (2017-01-16), XP051208408, Retrieved from the Internet <URL:http://www.3gpp.org/ftp/Meetings_3GPP_SYNC/RAN1/Docs/> [retrieved on 20170116]
- INTERDIGITAL INC: "Perspectives on Operation of Two-Step RACH", vol. RAN WG1, no. Athens, Greece; 20190225 - 20190301, 16 February 2019 (2019-02-16), XP051600276, Retrieved from the Internet <URL:http://www.3gpp.org/ftp/tsg%5Fran/WG1%5FRL1/TSGR1%5F96/Docs/R1%2D1902583%2Ezip> [retrieved on 20190216]

## Description

### TECHNICAL FIELD

The present disclosure relates generally to wireless communications, and more particularly to wireless transmissions based on carrier-sense multiple access (CSMA). The disclosure proposes a device and method for low latency wireless transmissions.

### BACKGROUND

IEEE 802.11 is part of the IEEE 802 set of local area network (LAN) protocols. The IEEE 802.11, short 802.11, standard specifies a set of media access control (MAC) and physical layer (PHY) protocols for implementing wireless local area network (WLAN) Wi-Fi computer communication in various frequencies.

The 802.11 protocol family employs carrier-sense multiple access with collision avoidance (CSMA/CA). CSMA is a MAC protocol in which a node verifies the absence of other traffic before transmitting on a shared transmission medium, such as an electrical bus or a band of the electromagnetic spectrum. CSMA/CA in computer networking, is a network multiple access method in which carrier sensing is used, but nodes attempt to avoid collisions by beginning transmission only after the channel is sensed to be "idle". When a node start transmitting, the node transmits packet data in its entirety.

It is known that 802.11 medium access is based on CSMA/CA, which comprises carrier sensing and inter-frame spacing. Inter-frame spacing provides priority access for a select few types of control frames necessary for proper network operations. For instance, the short inter-frame spacing (SIFS) value is used for ACKs that must directly follow the previous data frame. Before every frame transmission, Wi-Fi stations select a random timer value within the contention window (CW) range, and count down until the timer expires (unless the medium was idle immediately prior, in which case the CW timer may be skipped). Stations are allowed to transmit the frame only if the medium is still idle. If a collision occurs (as implied by the absence of an acknowledgement (ACK) frame), the transmitting stations may double the size of the CW to reduce the probability of a subsequent collision, up to a fixed maximum CW size.

Wi-Fi transmissions based on CSMA/CA include random back-off, thus there is a probability for collision with another transmitter that might lead to transmit failures. Transmit failures can be caused because a receiver fails to receive data packets sent by the transmitter, or because the receiver received the data packets but the transmitter fails to receive an ACK.

Regardless of the reason of the transmit failure, conventionally, the outcome of such a failure may include: an increased CW; in case of MAC protocol data unit (MPDU), retransmission of the frame/packet; in case of aggregated MPDU (A-MPDU), sending block ACK (BA, to acknowledged A-MPDU together using a single frame) Request (BAR); in case of a BAR failure, an increased CW and sending BAR retry, until BA is received. Another optional flow is to either automatically re-send the same A-MPDU in the next transmit operation; or transmit new frames up to the BA transmit window, and count on the next transmit operation BA bitmap to figure out the status of A-MPDU frames of the previous transmit operation. However, this leads to additional overhead and latency in Wi-Fi transmissions.

US 2007/234186 A1 discloses a method of communication between or among a plurality of devices in a communication system using one or more frames to transmit a plurality of bits includes encoding the plurality of bits in accordance with a first puncture code in a first device of the plurality of devices, transmitting the plurality of encoded bits to a second device of the plurality of devices, and determining in the first device an error condition indicated in a received acknowledgement from the second device. 3GPP R1-1902583 discloses a two-step random access procedure in NR, in which a first message (MsgA) comprising a preamble and a payload is transmitted and a second message (MsgB) provides feedback depending on whether the preamble and/or payload were successfully decoded. 3GPP R1-1700892 describes a simplified two-step RACH procedure for NR, where a first message including a preamble and a payload carrying a UE identity is followed by a random access response (Msg2) indicating, for example, successful reception or a case where the preamble was detected but the payload failed. US 2014/293868 A1 relates to WLAN systems and discloses NACK frame designs in which PHY or PLCP header information, including identifiers such as AID and BSSID, is used to provide negative acknowledgements when a header is correctly received but the data portion of a packet fails to decode.

### SUMMARY

In view of the above-mentioned limitations, embodiments of the present disclosure aim to introduce a solution for improving wireless transmissions efficiency. In particular, an objective is to avoid additional overhead caused by transmit failures. One aim is to achieve lower delay in wireless transmissions.

The objective is achieved by embodiments as provided in the enclosed independent claims. Advantageous implementations of the embodiments are further defined in the dependent claims.

A first aspect of the disclosure provides a first network device for a wireless network, configured to: send a physical layer (PHY) protocol data unit (PPDU) to a second network device, wherein the PPDU comprises a preamble and a payload, wherein the preamble comprises a first indication indicating that the payload is addressed to the second network device; receive a block acknowledgement (BA) from the second network device, wherein the BA indicates that the second network device succeeded to decode the preamble but failed to decode the payload; and resend the PPDU to the second network device in response to the BA.

The first network device (sender), by being configured to carry a first indication in the PPDU, indicates the second network device (receiver) that the PPDU is address to the second network device. Once the second network device gets such indication and fails to decode the payload of the PPDU, it can generate a new and dedicated BA, and send it back to the first network device. In this way, the first network device can get the feedback from the second network device sooner, and thus can resend the PPDU to the second network device with lower latency.

In particular, the first indication in the preamble comprises information of a basic service set (BSS), to which the second network device belongs, and/or an identifier (ID) of the second network device.

Notably, the IEEE 802.11ax, short 11ax, standard introduces a BSS color information as part of a high efficiency signal A (HE-SIG-A) preamble field. The information of the BSS, to which the second network device belongs, may thus be BSS color information. The 802.11ax standard also introduces a Station ID as part of a high efficiency signal B (HE-SIG-B) preamble field, to show user information in multi-user transmissions. The ID of the second network device may thus be a Station ID. It should be noted that the HE-SIG-B field may be added to indicate the resource allocation information for multiple users. The HE-SIG-B field may only be included for multi-user packets.

The payload comprises an aggregated MAC protocol data unit (A-MPDU), wherein the A-MPDU comprises a plurality of MPDUs.

Notably, a MPDU is a message that is exchanged between MAC entities in a communication system based on the layered OSI model. The A-MPDU aggregates multiple frames (MPDUs) into a single transmission.

In response to the receiving of the BA, the first network device is further configured to maintain a BA window of the first network device, wherein a size of the BA window indicates a number of consecutive MPDUs being allowed to acknowledge together as a single BA frame.

Contrary to the conventional solutions, this disclosure proposes to keep the value of the BA window when a transmit failure occurs, rather than to increase it, as there was no collision.

In an implementation form of the first aspect, the preamble further comprises a second indication indicating that the PPDU is from the first network device.

For instance, following the indication of downlink (DL), the second network device may know that the first network device is an access point (AP). Further, for uplink (UL), the second network device (e.g., the AP), may determine, e.g. a MAC address of the first network device (e.g., a station (STA), since the AP may have generated the UL trigger frame for the STA.

In an implementation form of the first aspect, the first network device is further configured to update a rate control based on the BA.

Optionally, in response to the received BA, the first network device may update the rate control with valid failed Tx statistics.

In an implementation form of the first aspect, the first network device is an 802.11 device, and the PPDU is a single user transmission or a multi user transmission.

Embodiments of the invention may apply to both single user and multi-user transmissions.

In an implementation form of the first aspect, the first network device is further configured to send the PPDU, and/or receive the BA, using orthogonal frequency-division multiple access (OFDMA) technology or multi-user multiple-input, multiple-output (MU-MIMO) technology.

802.11ax introduces multi-user techniques such as OFDMA and MU-MIMO. Embodiments of this disclosure may be valid for both of OFDMA and MU-MIMO.

A second aspect of the disclosure provides a second network device, being configured to receive a PPDU from a first network device, wherein the PPDU comprises a preamble and a payload, wherein the preamble comprises a first indication indicating that the payload is addressed to the second network device, wherein the indication comprises information of a BSS to which the second network device belongs, and/or an identifier of the second network device; if the preamble of the PPDU is successfully decoded, and it is detected that the payload is addressed to the second network device, but the payload is not successfully decoded, send a BA to the first network device, wherein the BA is used to indicate to the first network device that the second network device succeeded to decode the preamble but failed to decode the payload.

Embodiments of this disclosure propose an improved ACK delivering method. In particular, once the second network device (receiver) gets an indication that the payload is addressed to it, and further fails to decode the payload of the PPDU, it can generate a new and dedicated BA, and send it back to the first network device. This allows the first network device to resend the PPDU to the second network device with lower latency.

The payload comprises an A-MPDU, wherein the A-MPDU comprises a plurality of MPDUs.

When the plurality of MPDUs are not successfully decoded, the second network device is further configured to determine that the payload is not successfully decoded; and generate the BA that indicates the one or more MPDUs, which are not successfully decoded.

Optionally, if all MPDUs failed to be decoded, the second network device may decide to generate and send the BA as a NACK to indicate the first network device to resend the PPDU.

In an implementation form of the second aspect, wherein the PPDU is a single user transmission from the first network device, wherein if it is detected that the payload is addressed to the second network device, but no indication in the preamble indicating that the PPDU is from the first network device, the second network device is configured to broadcast the BA to a plurality of first network devices.

It can be noted that, 802.11ax only defines SIG-B information for multi-user DL preamble. With respect to UL transmissions, SIG-B does not exist in non-triggered uplink transmission, only SIG-A BSS color exists. Therefore, the second network device (the receiver in UL transmission, i.e., the AP) will not have enough information about the identity of the UL source MAC Address, and thus cannot send a unicast PBA. Thus, this embodiment proposes a newly designed broadcast BA.

In an implementation form of the second aspect, the preamble further comprises a second indication indicating that the PPDU is from the first network device.

In an implementation form of the second aspect, the second network device is further configured to obtain a MAC address of the first network device, and generate the BA using the MAC address of the first network device.

In an implementation form of the second aspect, the second network device is further configured to generate the BA using a MAC address of the second network device.

In an implementation form of the second aspect, the second network device is an 802.11 device, and the PPDU is a single user PPDU or a multi user PPDU.

In an implementation form of the second aspect, the second network device is further configured to send the BA, wherein the BA comprises a multi-traffic identifier.

In an implementation form of the second aspect, the second network device is further configured to receive the PPDU, and/or send the BA, using OFDMA technology or MU-MIMO technology.

A third aspect of the disclosure provides a method performed by a first network device, wherein the method comprises sending a PPDU to a second network device, wherein the PPDU comprises a preamble and a payload, wherein the preamble comprises a first indication indicating that the payload is addressed to the second network device; receiving a BA from the second network device, wherein the BA indicates that the second network device succeeded to decode the preamble but failed to decode the payload; and resending the PPDU to the second network device in response to the BA.

Implementation forms of the method of the third aspect may correspond to the implementation forms of the first network device of the first aspect described above. The method of the third aspect and its implementation forms achieve the same advantages and effects as described above for the first network device of the first aspect and its implementation forms.

A fourth aspect of the disclosure provides a method performed by a second network device, wherein the method comprises: receiving a PPDU from a first network device, wherein the first PPDU comprises a preamble and a payload, wherein the first preamble comprises a first indication indicating that the payload is addressed to the second device; and if the preamble of the PPDU is successfully decoded, and it is detected that the payload is addressed to the second network device, but the payload is not successfully decoded, sending a BA to the first network device, wherein the BA is used to indicate the first network device that the second network device succeeded to decode the preamble but failed to decode the payload.

Implementation forms of the method of the fourth aspect may correspond to the implementation forms of the second network device of the second aspect described above. The method of the fourth aspect and its implementation forms achieve the same advantages and effects as described above for the second network device of the second aspect and its implementation forms.

A fifth aspect of the disclosure provides a computer program product comprising a program code for carrying out, when implemented on a processor, the method according to the third aspect and any implementation forms of the third aspect, or the fourth aspect and any implementation forms of the fourth aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present disclosure will be explained in the following description of specific embodiments in relation to the enclosed drawings, in which
- FIG. 1: shows two exemplary cases of transmit failure.
- FIG. 2: shows a multi user scenario of transmit failure.
- FIG. 3: shows a hidden node use case.
- FIG. 4: shows a first network device according to an embodiment of the disclosure.
- FIG. 5: shows a second network device according to an embodiment of the disclosure.
- FIG. 6: shows a high efficiency multi-user PPDU transmission according to an embodiment of the disclosure.
- FIG. 7: shows a UL multi-user PPDU transmission according to an embodiment of the disclosure.
- FIG. 8: shows a UL multi-user PPDU transmission according to an embodiment of the disclosure.
- FIG. 9: shows a hidden node use case according to an embodiment of the disclosure.
- FIG. 10: shows a topology of a network simulator (NS-3) according to an embodiment of the disclosure.
- FIG. 11: shows a simulation result according to an embodiment of the disclosure.
- FIG. 12: shows a method according to an embodiment of the disclosure.
- FIG. 13: shows a method according to an embodiment of the disclosure.

### DETAILED DESCRIPTION OF EMBODIMENTS

Illustrative embodiments of methods, devices, and program product for efficient packet transmission in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

In order to increase throughput in wireless transmissions, frame aggregation of sending multiple frames in a single transmission is proposed. One structure of frame aggregation is A-MPDU, which aggregates multiple frames into a single transmission followed by a BA. In particular, each frame is a MPDU. Instead of transmitting an individual ACK for every MPDU (i.e., frame), multiple MPDUs can be acknowledged together using a single BA frame. For instance, a BA may contain a bitmap size of 64 bits. Each bit of this bitmap can represent a status (success/failure) of a MPDU.

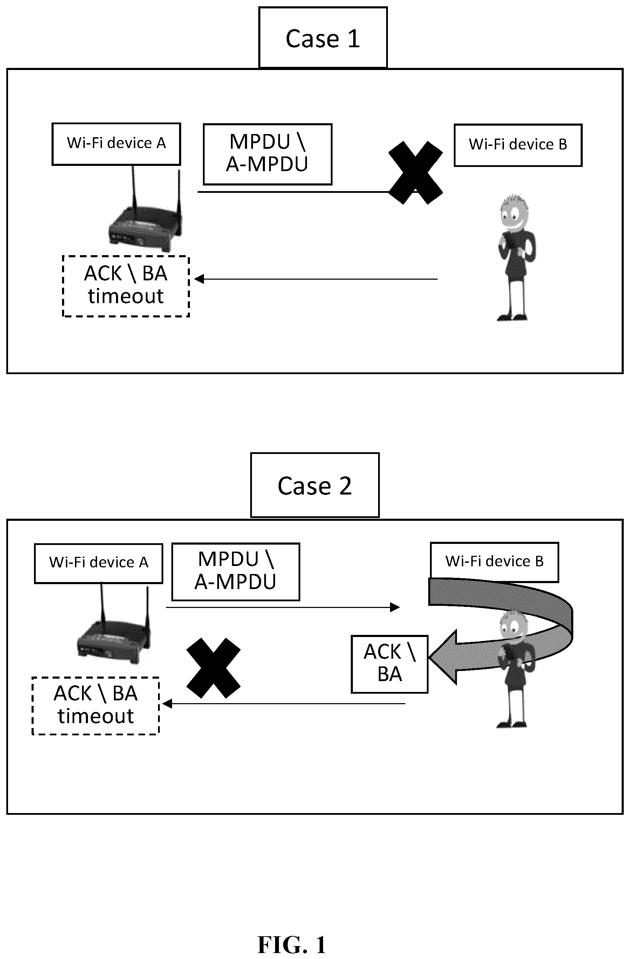

FIG. 1 shows two exemplary cases that cause a transmit failure. A transmit failure can be caused due to the following reasons: case 1 - a receiver (Wi-Fi device B) fails to receive the MPDU/A-MPDU; case 2 - the receiver received the MPDU/A-MPDU successfully and sends a ACK/BA, but the transmitter (Wi-Fi device A) fails to receive the ACK/BA.

Regardless of the reason of the transmit failure, conventionally, the outcome of such a failure may include: an increased CW; in case of MPDU, retransmission of the frame/packet; in case of A-MPDU, sending BA Request (BAR); in case of a BAR failure, an increased CW and sending BAR retry, until BA is received.

Another optional flow is to either automatically re-send the same A-MPDU in the next transmit operation; or transmit new frames up to the BA transmit window, and count on the next transmit operation BA bitmap to figure out the status of A-MPDU frames of the previous transmit operation.

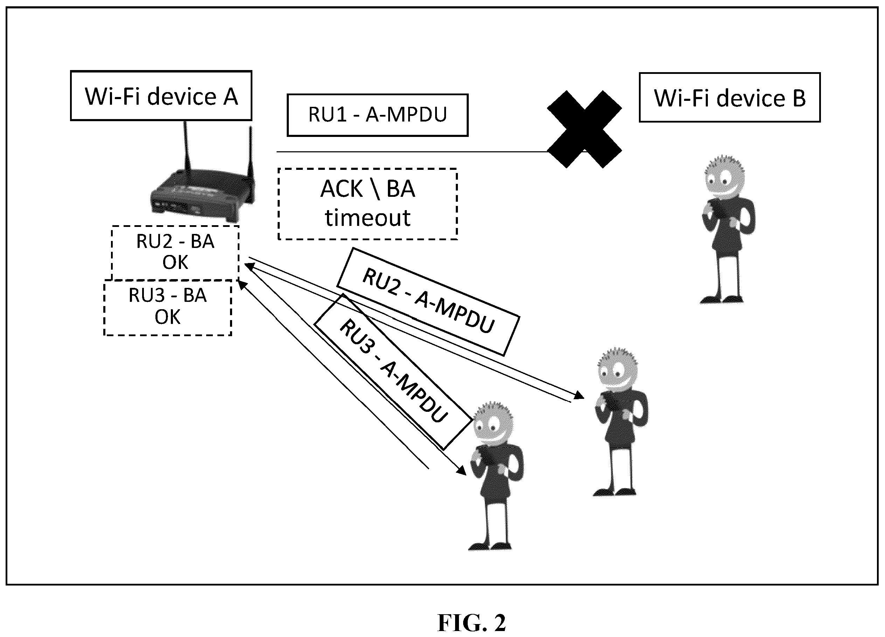

802.11ax introduces multi-user techniques such as OFDM and MU-MIMO. FIG. 2 shows a multi-user case, in which resource units (RUs) are transmitted to three receivers, respectively. RU2 and RU3 are successfully received by the corresponding receivers, and BAs are fed back to the sender (Wi-Fi device A). However, Wi-Fi device B fails to receive RU1. Multi-user case is increasing the probability for such transmit failure in which a preamble may be received but data packets could not be decoded correctly.

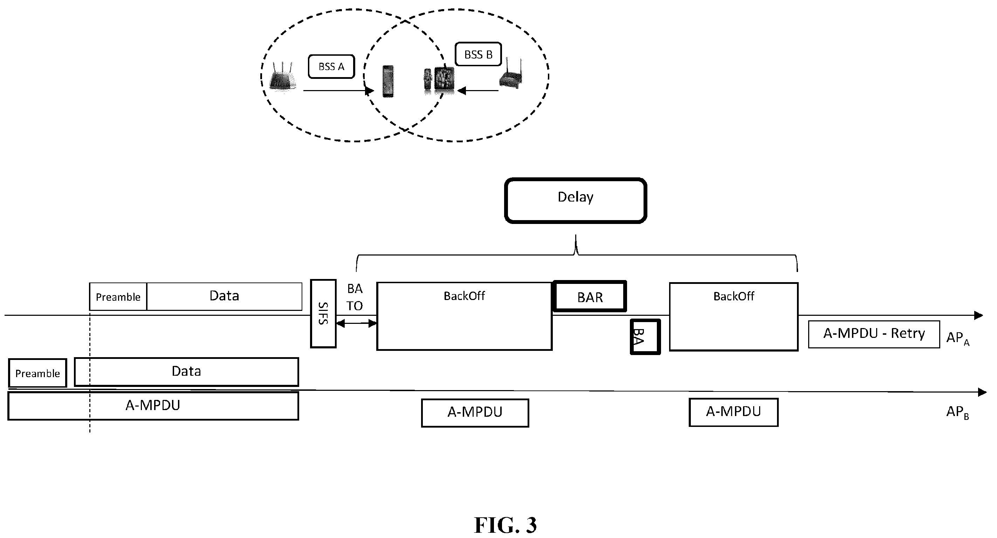

FIG. 3 depicts a hidden node scenario in wireless communications. In such case, access point A (AP_{A}) is in a BSS A, and AP_{B} is in a BSS B. BSS A and BSS B overlap with each other. AP_{A} can communicate with a node in BSS A, AP_{B} can also communicate with a node in BSS B. However, AP_{A} and AP_{B} cannot communicate with each other as they are out of range of each other. Therefore, AP_{A} might start transmitting while AP_{B} is already in transmitting of a PPDU (where the transmitting of a preamble may be already finished). This leads to difficulties in PHY sublayer since multiple nodes can send data packets to the AP simultaneously, which creates interference at the AP. The interferences can result in no packet getting through or the signal-to-interference-plus-noise ratio (SINR) being too low for decoding. In particular, a node may be able to decode the preamble, but the SINR is too low for data decoding. Conventionally, AP_{A} will not get any BA from the node, and a BAR will be sent after a "Back-off" period.

Next is considered the case 1 shown in FIG. 1, in which a receiver (Wi-Fi device B) fails to receive the MPDU/A-MPDU. The receiver either fails to decode the preamble, or succeeds to decode the preamble but fails to decode data frames. In a scenario where the receiver fails to decode the preamble, it is most probably due to collision with overlapping BSS (OBSS) preamble, or an enhanced distributed channel access (EDCA) collision event. In the other scenario where the receiver succeeds to decode the preamble, but fails to decode data frames, it is probably due to that, the preamble and data are not transmissions with the same characteristics, and may have different SINR requirements.

This disclosure focuses on the latter scenario, in which the preamble was successfully decoded and the receiver fails to decode even a single data frame.

As shown in FIG. 3, AP_{A} will wait until the end of the ACK/BA timeout, that is, for a longer time than if the BA was received. In the following, AP_{A} will increase the CW, which results in a longer delay and lower throughput, and sends BAR including retries of BAR until successfully receiving BA. It should be noted that if the BAR fails, the CW will be increased again (after each BAR failure).

Further, the following data transmission is depending on the received BA (e.g., bitmap). In case that the BAR is not used and the AP_{A} is moving forward and transmitting more data on the next transmit operation, typically rate control will be considered only after several consecutive BA timeout events. Notably, this leads to a significant latency.

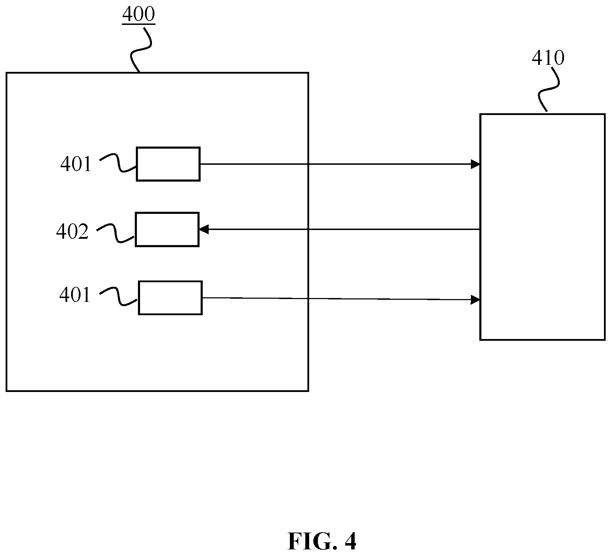

FIG. 4 shows a first network device 400 according to an embodiment of the disclosure. The first network device 400 may comprise processing circuitry (not shown) configured to perform, conduct or initiate the various operations of the first network device 400 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The first network device 400 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the first network device 400 to be performed. In one embodiment, the processing circuitry comprises one or more processors and a non-transitory memory connected to the one or more processors. The non-transitory memory may carry executable program code which, when executed by the one or more processors, causes the first network device 400 to perform, conduct or initiate the operations or methods described herein.

In particular, the first network device 400 is designed for a wireless network. The first network device 400 is configured to send a PPDU 401 to a second network device 410. In particular, the PPDU 401 comprises a preamble and a payload, wherein the preamble comprises a first indication indicating that the payload is addressed to the second network device. The first network device 400 is further configured to receive a BA 402 from the second network device 410, wherein the BA indicates that the second network device 410 succeeded to decode the preamble but failed to decode the payload. Then, the first network device 400 is configured to resend the PPDU 401 to the second network device 410 in response to the BA 402.

To address the aforementioned limitations, embodiments of this disclosure aim to improve a wireless multi-user transmission efficiency and to achieve lower delay. In particular, an approach of a receiver sending back a new and dedicated BA to a sender is proposed, in order to allow the sender to resend data packet which is not successfully decoded to the receiver with low latency. This disclosure is to use information at the PHY level so the MAC layer could generate a negative BA for all MPDUs in current transmit A-MPDU.

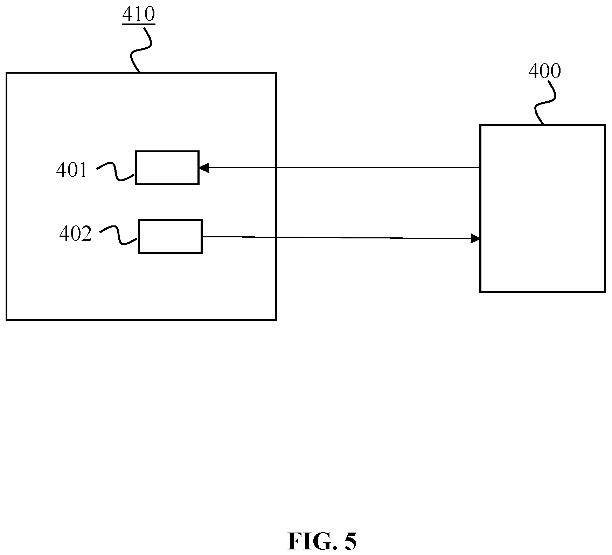

FIG. 5 shows a second network device 410 according to an embodiment of the disclosure. The second network device 410 may comprise processing circuitry (not shown) configured to perform, conduct or initiate the various operations of the second network device 410 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The second network device 410 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the second network device 410 to be performed. In one embodiment, the processing circuitry comprises one or more processors and a non-transitory memory connected to the one or more processors. The non-transitory memory may carry executable program code which, when executed by the one or more processors, causes the second network device 410 to perform, conduct or initiate the operations or methods described herein.

In particular, the second network device 410 shown in FIG. 5 is designed for a wireless network. The second network device 410 is configured to receive a PPDU 401 from a first network device 400. The first network device 400 shown in FIG. 5 may be the first network device shown in FIG. 4. In particular, the PPDU 401 comprises a preamble and a payload, wherein the preamble comprises a first indication indicating that the payload is addressed to the second network device 410. If the preamble of the PPDU 401 is successfully decoded, and it is detected that the payload is addressed to the second network device 410, but the payload is not successfully decoded, the second network device 410 is further configured to send a BA 402 to the first network device 400, wherein the BA 402 is used to indicate to the first network device 400 that the second network device 410 succeeded to decode the preamble but failed to decode the payload.

It should be noted that once the second network device 410 succeeds to decode the preamble of the PPDU 401, the MAC layer gets the indication that the payload is addressed to the second network device 410, and may fail to decode the payload. For this case, the present disclosure proposes to generate a new and dedicated BA, also referred to as Preamble BA (PBA), and send it back to the first network device 400.

802.11ax introduces a BSS color information as part of the HE-SIG-A preamble field. The HE-SIG-A field may contain information about the packet to follow, including whether it is DL or UL, BSS color, modulation and coding scheme (MCS) rate, bandwidth and spatial stream information, and remaining time in the transmit opportunity. Notably, this field has different content for single-user, multi-user and trigger-based frames.

802.11ax also introduces a Station ID as part of User Information in HE-SIB-B preamble field. The HE-SIG-B field may only be included for multi-user packets. It may include information that is common to all recipients, and other fields that are user-specific.

802.11be may also introduce a Unified SIG field (USIG), that may include both the BSS Color and the AID in all modes (single user and multi-user). Embodiments of this disclosure may also be based on 802.11ax capabilities. However, there is no restriction to expend this disclosure to any other protocols such as 802.11be.

An embodiment of the disclosure proposes a solution based on BSS color located at HE-SIG-A and multi-user information (i.e., association ID (AID)) located at HE-SIG-B. Optionally, according to an embodiment of the disclosure, the first indication in the preamble of the PPDU 401 may comprise information of a BSS to which the second network device 410 belongs, and/or an identifier of the second network device 410. By using the BSS color and/or User Information, the PHY layer of the first network device 400 can indicate to the MAC layer of the second network device 410 that the PPDU 401 was addressed to it.

Possibly, the first indication may comprise the information of the BSS to which the second network device 410 belongs, and possibly additionally the identifier of the second network device 410. By using the BSS color, and possibly additionally using the User Information, the PHY layer of the first network device 400 can indicate to the MAC layer of the second network device 410 that the PPDU 401 was addressed to it.

In particular, even though at the MAC layer the WiFi header information is not available, a receiver, i.e., the second network device 410, can get the required information from the PHY layer using the preamble information of the BSS color and/or the STA AID.

Notably, a MPDU is a message that is exchanged between MAC entities in a communication system. The A-MPDU aggregates multiple frames (MPDUs) into a single transmission. Optionally, according to an embodiment of the disclosure, the payload of the PPDU 401 may comprise an A-MPDU, wherein the A-MPDU comprises a plurality of MPDUs.

According to an embodiment of the disclosure, when the plurality of MPDUs are not successfully decoded, the second network device 410 may be further configured to determine that the payload is not successfully decoded. Further, the second network device 410 may be configured to generate the BA that indicates the one or more MPDUs, which are not successfully decoded.

Notably, according to an embodiment of the disclosure, the preamble of the PPDU 401 may further comprise a second indication indicating that the PPDU 401 is from the first network device 400.

802.11ax includes two multi-user modes: OFDMA in the frequency dimension, and MU-MIMO, which exploits diversity in space. 802.11ax provides common control mechanisms. DL and UL are different. There is no prior signaling for DL multi-user control, that is, all relevant information is contained in the packet header, specifically in the HE-SIG-B field, which is only included in downlink multi-user frames. However, multi-user UL traffic requires a special "trigger" frame, wherein the AP allocates MU-MIMO groups and OFDMA RUs to its clients, and informs them of the allocation. This in turn requires that the AP polls the STAs for their uplink traffic requirements.

In case of OFDMA DL, following the indication of DL, the STA, i.e., the second network device 410, knows the MAC address of the AP and can use it for the PBA address.

In case of OFDMA UL, the AP, i.e., the second network device 410, knows per RU the allocated STA, i.e., the first network device 400, as the AP has generated the UL Trigger Frame. Thus, the AP can generate the PBA with the STA address either as part of per STA BA (on the same RU) or as part of the BA for multiple STAs.

Therefore, according to an embodiment of the disclosure, the second network device 410 may be further configured to obtain a MAC address of the first network device 400, and to generate the BA using the MAC address of the first network device 400.

Notably, in case of OFDMA trigger-based UL, if multiple STAs are on same 20MHz RU, it is more complicated to parse the preamble per STA. Optionally, it is proposed to restrict it as only one user on 20MHz RU. Possibly, some PHY algorithms may be described to detect the existence of the preamble.

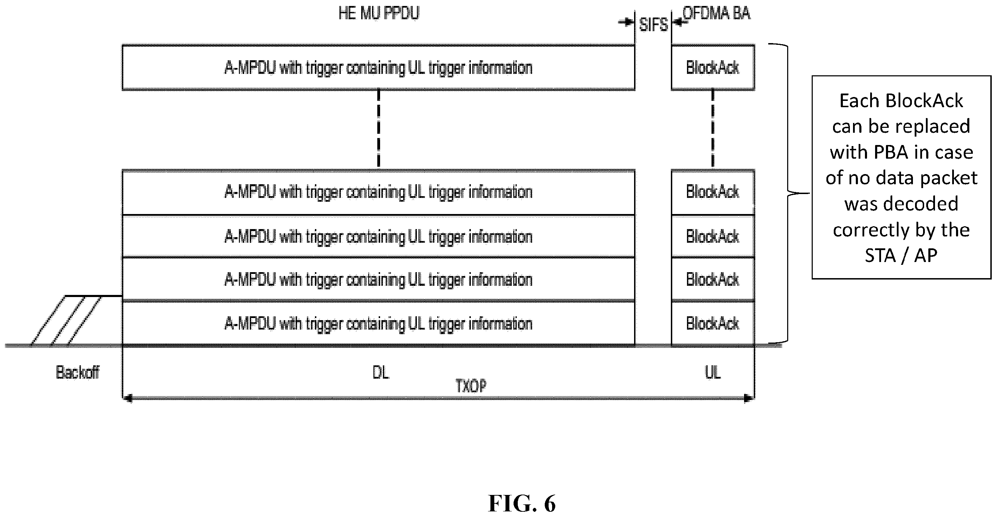

FIG. 6 shows an example of a high efficient multi-user PPDU transmission with an immediate UL OFDMA ACK. In particular, according to an embodiment of this disclosure, each "BlockAck" shown in FIG. 6 can be replaced with PBA, i.e., BA 402, in case of no data packet was decoded correctly by the STA/AP, namely, the second network device 410 as shown in FIG. 4 or 5.

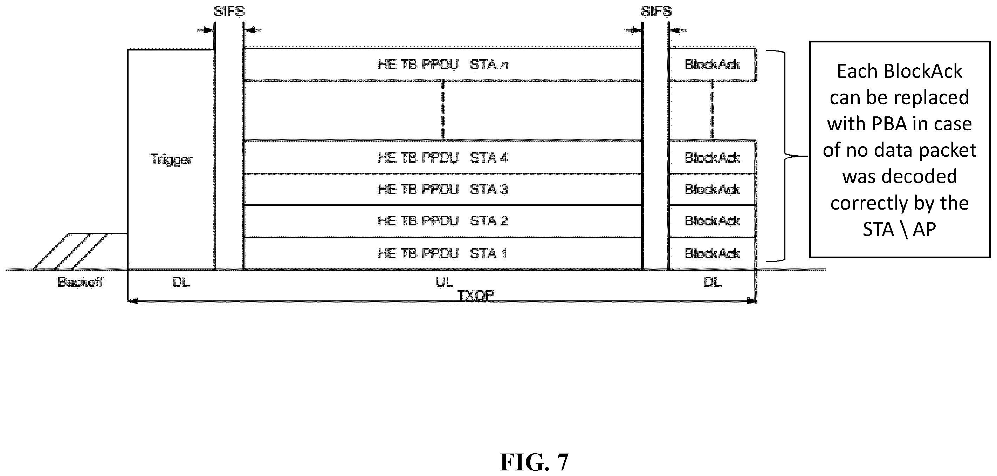

FIG. 7 shows an example of a UL multi-user PPDU transmission with individually addressed BA frame acknowledging the frames received from the respective STAs. In particular, according to an embodiment of the disclosure, each "BlockAck" shown in FIG. 7 can be replaced with PBA, i.e., BA 402, in case of no data packet was decoded correctly by the STA/AP, namely, the second network device 410 as shown in FIG. 4 or 5.

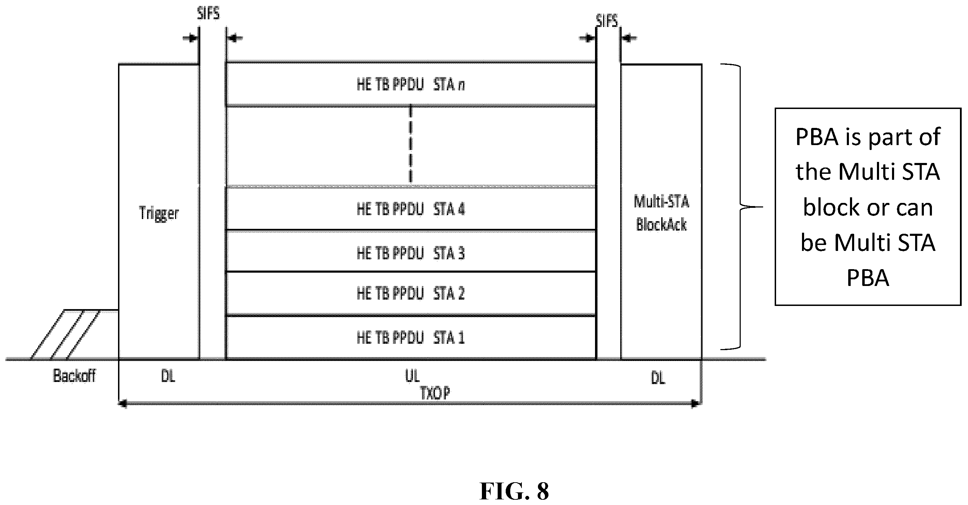

FIG. 8 shows a UL multi-user PPDU transmission with an immediate Multi-STA BA frame acknowledging the MPDUs. In particular, according to an embodiment of the disclosure, PBA, i.e., BA 402, is part of the Multi-STA block or can be a Multi-STA PBA.

In addition, as there is no information in the preamble about the traffic ID (TID), the second network device 410 should replay the PBA with multi-TID, particularly with information about all BA Agreements.

According to an embodiment of the disclosure, once a sender, i.e., the first network device 400, which is waiting for a BA receives such a PBA, it maintains a BA window of the first network device 400, wherein a size of the BA window indicates a number of consecutive MPDUs being allowed to acknowledge together as a single BA frame.

Conventionally, if a collision occurs (as implied by the absence of an acknowledgement (ACK) frame), the sender may double the size of the CW to reduce the probability of a subsequent collision. This embodiment particularly proposes to keep the value of BA window, as there was no collision happened.

In addition, in response to the receiving of BA 402, the first network device 400 may prepare next transmit operation with required retry frames, rather than send a BAR to the second network device 410.

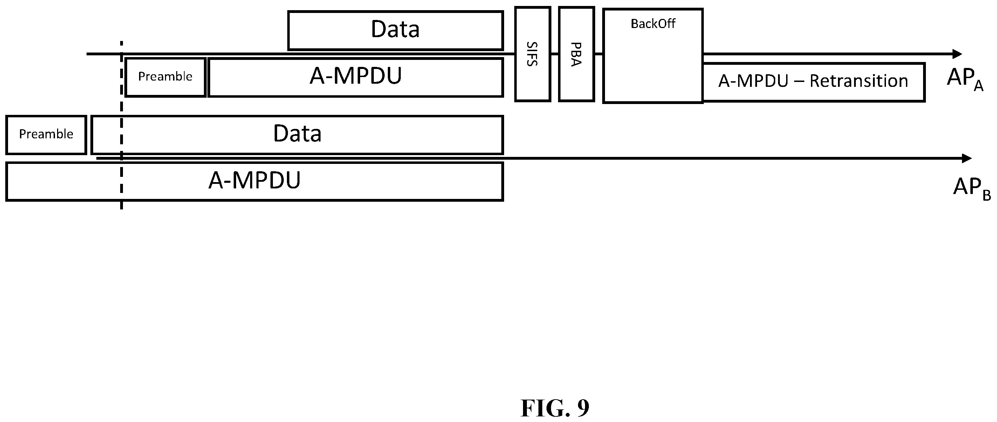

FIG. 9 shows a hidden node scenario according to an embodiment of the disclosure. Notably, the AP_{A} and AP_{B} shown in FIG. 9 has a similar structure as shown in FIG. 3. In particular, right after receiving the PBA, i.e., the BA 402, AP_{A} can go on and send retransmission, and save the wasted time of increasing the CW and/or a BA window, and sending BAR as shown in FIG. 3. Compared to the hidden node scenario shown in FIG. 3, this embodiment allows sparing the BAR/BA, and also avoiding an increasing CW. Notably, following the proposed solution using PBA, the system performance can be improved.

Further, according to an embodiment of the disclosure, the first network device 400 may be configured to update a rate control based on the BA, particularly update the rate control with valid failed transmit statistics.

Another use case in which using PBA will lead to lower latency and higher MAC/System efficiency is a trial and error-based rate control algorithm (RCA). These RCAs are probing higher PHY rates (e.g., MCS coding rate, data rate) which requires higher signal-to-noise ratio (SNR) / SINR than current used PHY rate. Conventionally, in a case of failure due to lower SNR than required, the receiver will not reply with full NACK. The sender will have to guess the reason of the failure, and thus longer converge time will be required. By using PBA NACK, as proposed in this disclosure, the sender, i.e., the first network device 400, may be immediately informed about the SNR issue and thus can quickly adapt the used PHY coding scheme. This can lead to less retries and lower delay.

This disclosure can apply to wireless single user transmissions as well. It can be noted that, 802.11ax only defines SIG-B information for multi-user DL preamble. According to an embodiment of this disclosure, a new type of SIG-B with User Information only for a single user (e.g., allocating the maximum available RU) is designed and added in the DL preamble field. In this way, a station (STA) at DL, i.e., the second network device 410, would have the whole required information (BSS Color and STA ID) in order to generate the PBA in case of data failure.

Notably, with respect to UL transmissions, SIG-B doesn't exist in non-triggered UL transmission, only SIG-A BSS color exists. Therefore, the AP (the receiver in UL transmission, i.e., the second network device 410) will not have enough information about the identity of the UL source MAC Address, and thus cannot send a unicast PBA.

An embodiment of this disclosure introduces a new broadcast PBA (BPBA), taking into account that only single STA in its BSS is waiting for BA right now. STA (the sender in UL transmission, i.e., the first network device 100) that receives the BPBA during Block ACK timeout can assume it was addressed to it (as long as the BSS color matches).

In this embodiment, the PPDU 401 is a single user transmission from the first network device 400, wherein if it is detected that the payload is addressed to the second network device 410, but no indication in the preamble indicating that the PPDU 401 is from the first network device 400, the second network device 410 may be configured to broadcast the BA to a plurality of first network devices 400.

As there is no information in the preamble about the TID, the receiver should replay the PBA with multi-traffic identifier, particularly with information about all BA Agreements.

Notably, traffic is bidirectional, and thus each endpoint is both a sender and a receiver. Possibly, the first network device 400 shown in FIG. 4 may be the second network device 410 shown in FIG. 5 in a specific implementation.

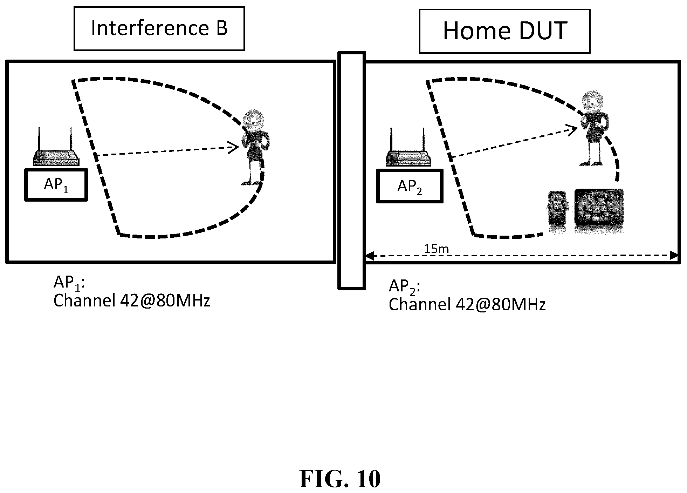

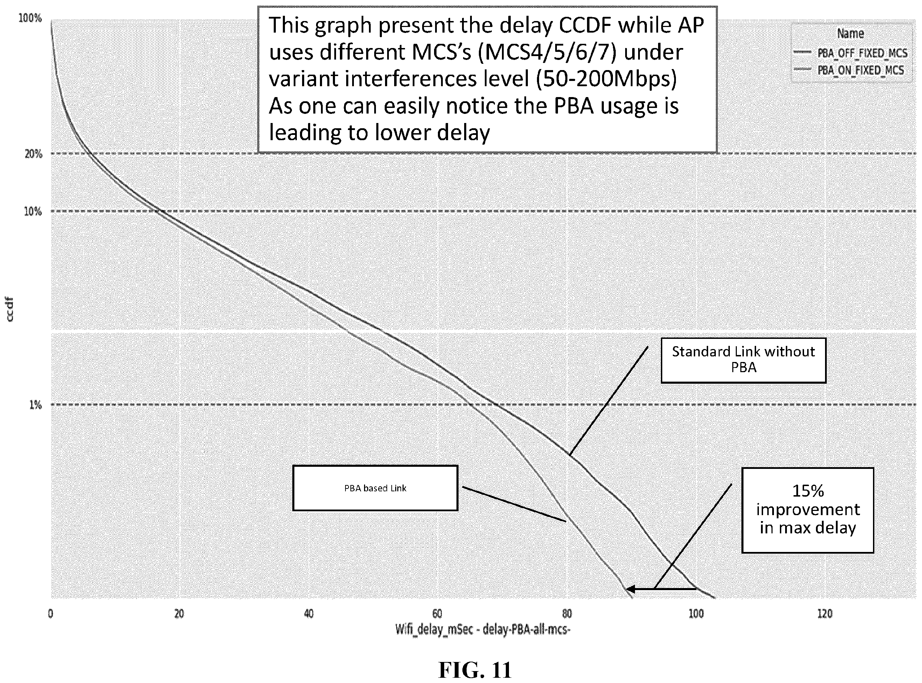

FIG. 10 shows a NS-3 topology according to an embodiment of the disclosure. The use case of aggressive RCA is simulated in the presence of interference. Notably, the main role of the interference AP₁ is to perform time sharing with AP₂, and leads to delay while accessing the air for BAR transmit. Thus, the advantage of PBA usage is emphasized. FIG. 11 presents a simulation result of the delay complementary cumulative distribution function (CCDF) while the AP uses different MCS (MCS4/5/6/7) under variant interferences level (50-200 Mbps). It can be easily noted that the usage of a PBA is leading to a lower delay. Using the new PBA proposed in embodiments of this disclosure leads to a significant delay improvement (reduction). In this simulated setup, the usage of PBA leads to a 15% decrease of the maximum delay.

It should be noted that, the PBA may also be used for hybrid automatic repeat request (HARQ) techniques. For instance, the sender may retransmit everything and let the receiver decide whether to combine the retransmissions.

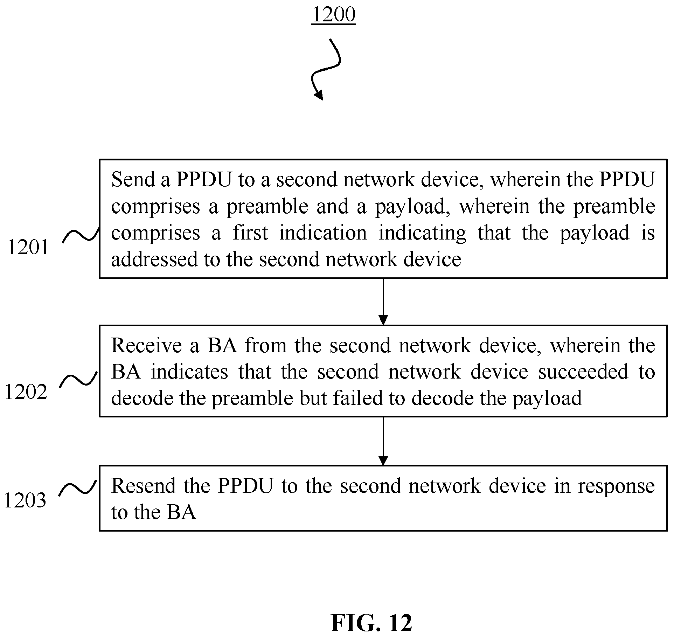

FIG. 12 shows a method 1200 according to an embodiment of the disclosure. In a particular embodiment of the disclosure, the method 1200 is performed by a first network device 400 shown in FIG. 4. The method 1200 comprises: a step 1201 of sending a PPDU 401 to a second network device 410, wherein the PPDU 401 comprises a preamble and a payload, wherein the preamble comprises a first indication indicating that the payload is addressed to the second network device; a step 1202 of receiving a BA 402 from the second network device 410, wherein the BA 402 indicates that the second network device 410 succeeded to decode the preamble but failed to decode the payload; and a step 1203 of resending the PPDU 401 to the second network device 410 in response to the BA 402. Possibly, the second network device 410 is the second network device shown in FIG. 4 or FIG. 5.

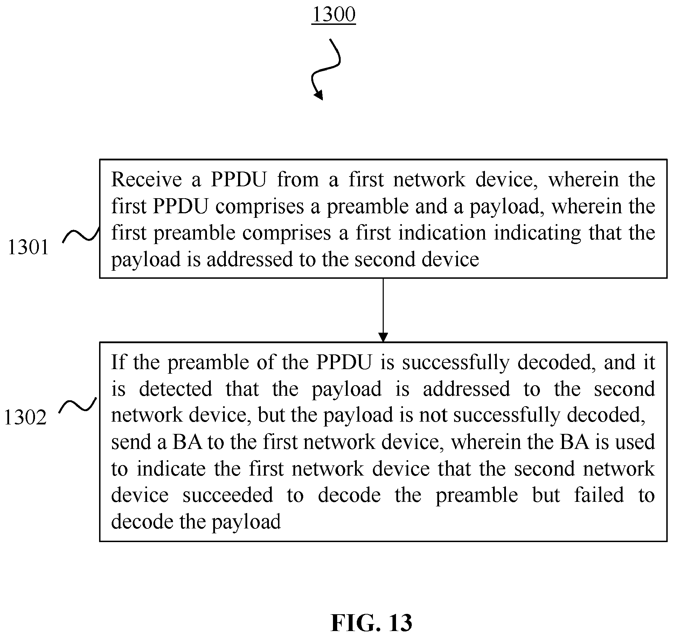

FIG. 13 shows a method 1300 according to an embodiment of the disclosure. In a particular embodiment of the disclosure, the method 1300 is performed by a second network device 410 shown in FIG. 5. The method 1300 comprises: a step 1301 of receiving a PPDU 401 from a first network device 400, wherein the PPDU 401 comprises a preamble and a payload, wherein the first preamble comprises a first indication indicating that the payload is addressed to the second device 410; and if the preamble of the PPDU 401 is successfully decoded, and it is detected that the payload is addressed to the second network device 410, but the payload is not successfully decoded, a step 1302 of sending a BA 402 to the first network device 400, wherein the BA 402 is used to indicate the first network device 400 that the second network device 410 succeeded to decode the preamble but failed to decode the payload. Possibly, the first network device 400 is the first network device shown in FIG. 4 or FIG. 5.

The present disclosure has been described in conjunction with the IEEE 802.11 wireless communication protocol. Other wireless communication protocols, communication standards, and technologies the present disclosure may be applied to, are, but are not limited to, IEEE 802.11, IEEE 802.15, IEEE 802.16, IEEE 1609, Worldwide Interoperability for Microwave Access (Wi-MAX), Transmission Control Protocol and Internet Protocol (TCP/IP), User Datagram Protocol (UDP), Hypertext Transfer Protocol (HTTP), File Transfer Protocol (FTP), Voice over Internet Protocol (VoIP), Wi-Fi calling, a protocol for email, instant messaging, and/or Short Message Service (SMS), and/or other IoT communication protocols.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the first network device 400 and the second network device 410, respectively, comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the first network device 400 and the second network device 410, respectively, may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A first network device (400) for a wireless network, the first network device (400) being configured to:
send a physical layer, PHY, protocol data unit, PPDU (401), to a second network device (410), wherein the PPDU (401) comprises a preamble and a payload, wherein the preamble comprises a first indication indicating that the payload is addressed to the second network device (410), wherein the first indication in the preamble comprises information of a basic service set, BSS, to which the second network device (410) belongs, and/or an identifier of the second network device (410), and wherein the payload comprises an aggregated media access control, MAC, protocol data unit, A-MPDU, wherein the A-MPDU comprises a plurality of MPDUs;
receive a block acknowledgement, BA (402), from the second network device (410), wherein the BA (402) indicates that the second network device (410) succeeded to decode the preamble but failed to decode the payload;
in response to the receiving of the BA (402), maintain a BA window of the first network device (400), wherein a size of the BA window indicates a number of consecutive MPDUs being allowed to acknowledge together as a single BA frame; and
resend the PPDU (401) to the second network device (410) in response to the BA (402).

2. The first network device (400) according to claim 1. wherein the preamble further comprises a second indication indicating that the PPDU (401) is from the first network device (400).

3. The first network device (400) according to one of the claims 1 to 2, further configured to:
update a rate control based on the BA (402).

4. The first network device (400) according to one of the claims 1 to 3, wherein the first network device (400) is an 802.11 device, and the PPDU (401) is a single user transmission or a multi user transmission.

5. The first network device (400) according to one of the claims 1 to 4, configured to:
send the PPDU (401), and/or receive the BA (402), using orthogonal frequency-division multiple access, OFDMA, technology or multi-user multiple-input, multiple-output, MU-MIMO, technology.

6. A second network device (410), being configured to:
receive a physical layer, PHY, protocol data unit, PPDU (401), from a first network device (400), wherein the PPDU (401) comprises a preamble and a payload, wherein the preamble comprises a first indication indicating that the payload is addressed to the second network device (410), wherein the indication comprises information of a basic service set, BSS, to which the second network device (410) belongs, and/or an identifier of the second network device (410), wherein the payload comprises an aggregated media access control, MAC, protocol data unit, A-MPDU, wherein the A-MPDU comprises a plurality of MPDUs;
if the preamble of the PPDU (401) is successfully decoded, and it is detected that the payload is addressed to the second network device (410), but the payload is not successfully decoded,
send a block acknowledgement, BA (402), to the first network device (400), wherein the BA(402) is used to indicate to the first network device (400) that the second network device (410) succeeded to decode the preamble but failed to decode the payload,
wherein when the plurality of MPDUs are not successfully decoded, determine that the payload is not successfully decoded; and generate the BA (402) that indicates the one or more MPDUs, which are not successfully decoded.

7. The second network device (410) according to claim 6, wherein the PPDU (401) is a single user transmission from the first network device (400), wherein if it is detected that the payload is addressed to the second network device (410), but no indication in the preamble indicating that the PPDU (401) is from the first network device (400), the second network device (410) is configured to:
broadcast the BA (402) to a plurality of first network devices (400).

8. The second network device (410) according to one of the claims 6 to 7, wherein the preamble further comprises a second indication indicating that the PPDU (401) is from the first network device (400).

9. The second network device (410) according to claim 8, further configured to:
obtain a MAC address of the first network device (400), and
generate the BA (402) using the MAC address of the first network device (400).

10. The second network device (410) according to one of the claims 6 to 9, further configured to:
generate the BA (402) using a MAC address of the second network device (410).

11. The second network device (410) according to one of the claims 6 to 10, wherein the second network device (410) is an 802.11 device, and the PPDU (401) is a single user PPDU or a multi user PPDU.

12. The second network device (410) according to one of the claims 6 to 11, further configured to:
send the BA (402), wherein the BA (402) comprises a multi-traffic identifier.

13. The second network device (410) according to one of the claims 6 to 12, further configured to:
receive the PPDU (401), and/or send the BA (402), using orthogonal frequency-division multiple access, OFDMA, technology or multi-user multiple-input, multiple-output, MU-MIMO, technology.

14. A method (1200) comprising:
sending (1201) a physical layer, PHY, protocol data unit, PPDU (401), to a second network device (410), wherein the PPDU (401) comprises a preamble and a payload, wherein the preamble comprises a first indication indicating that the payload is addressed to the second network device (410), wherein the first indication in the preamble comprises information of a basic service set, BSS, to which the second network device (410) belongs, and/or an identifier of the second network device (410), and wherein the payload comprises an aggregated media access control, MAC, protocol data unit, A-MPDU, wherein the A-MPDU comprises a plurality of MPDUs;
receiving (1202) a block acknowledgement, BA (402), from the second network device (410), wherein the BA (402) indicates that the second network device (410) succeeded to decode the preamble but failed to decode the payload;
in response to the receiving of the BA (402), maintaining a BA window of the first network device (400), wherein a size of the BA window indicates a number of consecutive MPDUs being allowed to acknowledge together as a single BA frame; and
resending (1203) the PPDU (401) to the second network device (410) in response to the BA (402).

15. A method (1300) comprising:
receiving (1301) a physical layer, PHY, protocol data unit, PPDU (401), from a first network device (400), wherein the PPDU (401) comprises a preamble and a payload, wherein the preamble comprises a first indication indicating that the payload is addressed to the second device (410), wherein the indication comprises information of a basic service set, BSS, to which the second network device (410) belongs, and/or an identifier of the second network device (410), wherein the payload comprises an aggregated media access control, MAC, protocol data unit, A-MPDU, wherein the A-MPDU comprises a plurality of MPDUs;
if the preamble of the PPDU (401) is successfully decoded, and it is detected that the payload is addressed to the second network device (410), but the payload is not successfully decoded,
sending (1302) a block acknowledgement, BA (402), to the first network device (400), wherein the BA (402) is used to indicate the first network device (400) that the second network device (410) succeeded to decode the preamble but failed to decode the payload,
wherein the method further comprises: when the plurality of MPDUs are not successfully decoded, determining that the payload is not successfully decoded; and generating the BA (402) that indicates the one or more MPDUs, which are not successfully decoded.

16. A computer program product comprising a program code for carrying out, when implemented on a processor, the method according to claim 14 or 15.

## Patentansprüche

1. Erstes Netzwerkgerät (400) für ein Drahtlosnetzwerk, wobei das erste Netzwerkgerät (400) ausgelegt ist zum:
Senden einer Protokolldateneinheit der physikalischen Schicht (PHY) (PPDU) (401), an ein zweites Netzwerkgerät (410), wobei die PPDU (401) eine Präambel und eine Nutzlast umfasst, wobei die Präambel eine erste Angabe umfasst, die angibt, dass die Nutzlast an das zweite Netzwerkgerät (410) adressiert ist, wobei die erste Angabe in der Präambel Informationen über einen Basisdienstsatz (BSS) umfasst, zu dem das zweite Netzwerkgerät (410) gehört, und/oder eine Kennung des zweiten Netzwerkgeräts (410), und wobei die Nutzlast eine aggregierte Protokolldateneinheit der Medienzugriffssteuerung (MAC) (A-MPDU) umfasst, wobei die A-MPDU eine Vielzahl von MPDUs umfasst;
Empfangen einer Blockbestätigung (BA) (402) von dem zweiten Netzwerkgerät (410), wobei die BA (402) anzeigt, dass das zweite Netzwerkgerät (410) die Präambel erfolgreich dekodieren konnte, die Nutzlast jedoch nicht dekodieren konnte;
als Reaktion auf das Empfangen der BA (402), Aufrechterhalten eines BA-Fensters des ersten Netzwerkgeräts (400), wobei eine Größe des BA-Fensters eine Anzahl aufeinanderfolgender MPDUs angibt, die gemeinsam als ein einziger BA-Frame bestätigt werden dürfen; und
erneutes Senden der PPDU (401) an das zweite Netzwerkgerät (410) als Reaktion auf die BA (402).

2. Erstes Netzwerkgerät (400) nach Anspruch 1, wobei die Präambel ferner eine zweite Angabe umfasst, die darauf hinweist, dass die PPDU (401) von dem ersten Netzwerkgerät (400) stammt.

3. Erstes Netzwerkgerät (400) nach einem der Ansprüche 1 bis 2, ferner ausgelegt zum: Aktualisieren einer Ratensteuerung auf Grundlage der BA (402).

4. Erstes Netzwerkgerät (400) nach einem der Ansprüche 1 bis 3, wobei das erste Netzwerkgerät (400) ein 802.11-Gerät ist und die PPDU (401) eine Einzelbenutzerübertragung oder eine Mehrbenutzerübertragung ist.

5. Erstes Netzwerkgerät (400) nach einem der Ansprüche 1 bis 4, ausgelegt zum:
Senden der PPDU (401) und/oder Empfangen der BA (402) unter Verwendung der OFDMA-Technologie (orthogonaler Frequenzmultiplex-Mehrfachzugriff) oder der MU-MIMO-Technologie (Mehrbenutzer-MIMO).

6. Zweites Netzwerkgerät (410), ausgelegt zum:
Empfangen einer Protokolldateneinheit der physikalischen Schicht (PHY) (PPDU) (401), von einem ersten Netzwerkgerät (400), wobei die PPDU (401) eine Präambel und eine Nutzlast umfasst, wobei die Präambel eine erste Angabe umfasst, die angibt, dass die Nutzlast an das zweite Netzwerkgerät (410) adressiert ist, wobei die Angabe Informationen über einen Basisdienstsatz (BSS) umfasst, zu dem das zweite Netzwerkgerät (410) gehört, und/oder eine Kennung des zweiten Netzwerkgeräts (410), wobei die Nutzlast eine aggregierte Protokolldateneinheit der Medienzugriffssteuerung (MAC) (A-MPDU) umfasst, wobei die A-MPDU eine Vielzahl von MPDUs umfasst;
wenn die Präambel der PPDU (401) erfolgreich dekodiert wird und festgestellt wird, dass die Nutzlast an das zweite Netzwerkgerät (410) adressiert ist, die Dekodierung der Nutzlast jedoch fehlschlägt, Senden einer Blockbestätigung, BA (402), an das erste Netzwerkgerät (400), wobei die BA (402) eingesetzt wird, um dem ersten Netzwerkgerät (400) zu signalisieren, dass das zweite Netzwerkgerät (410) die Präambel erfolgreich dekodieren konnte, die Nutzdaten jedoch nicht dekodieren konnte,
wobei, wenn die Vielzahl der MPDUs nicht erfolgreich dekodiert werden konnte, bestimmt wird, dass die Nutzlast nicht erfolgreich dekodiert wurde; und die BA (402) erzeugt wird, die die eine oder die mehreren MPDUs angibt, die nicht erfolgreich dekodiert wurden.

7. Zweites Netzwerkgerät (410) nach Anspruch 6, wobei die PPDU (401) eine Einzelbenutzerübertragung vom ersten Netzwerkgerät (400) ist, wobei, wenn erkannt wird, dass die Nutzlast an das zweite Netzwerkgerät (410) adressiert ist, aber in der Präambel kein Hinweis darauf enthalten ist, dass die PPDU (401) vom ersten Netzwerkgerät (400) stammt, das zweite Netzwerkgerät (410) ausgelegt ist zum:
Senden der BA (402) an eine Vielzahl von ersten Netzwerkgeräten (400).

8. Zweites Netzwerkgerät (410) nach einem der Ansprüche 6 bis 7, wobei die Präambel ferner eine zweite Angabe umfasst, die darauf hinweist, dass die PPDU (401) von dem ersten Netzwerkgerät (400) stammt.

9. Zweites Netzwerkgerät (410) nach Anspruch 8, ferner ausgelegt zum:
Beziehen einer MAC-Adresse des ersten Netzwerkgeräts (400) und
Erzeugen der BA (402) unter Verwendung der MAC-Adresse des ersten Netzwerkgeräts (400).

10. Zweites Netzwerkgerät (410) nach einem der Ansprüche 6 bis 9, ferner ausgelegt zum:
Erzeugen der BA (402) unter Verwendung einer MAC-Adresse des zweiten Netzwerkgeräts (410).

11. Zweites Netzwerkgerät (410) nach einem der Ansprüche 6 bis 10, wobei das zweite Netzwerkgerät (410) ein 802.11-Gerät ist und die PPDU (401) eine Einzelbenutzer-PPDU oder eine Mehrbenutzer-PPDU ist.

12. Zweites Netzwerkgerät (410) nach einem der Ansprüche 6 bis 11, ferner ausgelegt zum:
Senden der BA (402), wobei die BA (402) eine Mehrverkehrskennung umfasst.

13. Zweites Netzwerkgerät (410) nach einem der Ansprüche 6 bis 12, ferner ausgelegt zum:
Empfangen der PPDU (401) und/oder Senden der BA (402) unter Verwendung der OFDMA-Technologie (orthogonaler Frequenzmultiplex-Mehrfachzugriff) oder der MU-MIMO-Technologie (Mehrbenutzer-MIMO).

14. Verfahren (1200) umfassend:
Senden (1201) einer Protokolldateneinheit der physikalischen Schicht (PHY) (PPDU) (401) an ein zweites Netzwerkgerät (410),
wobei die PPDU (401) eine Präambel und eine Nutzlast umfasst, wobei die Präambel eine erste Angabe umfasst, die angibt, dass die Nutzlast an das zweite Netzwerkgerät (410) adressiert ist, wobei die erste Angabe in der Präambel Informationen über einen Basisdienstsatz (BSS) umfasst, zu dem das zweite Netzwerkgerät (410) gehört, und/oder eine Kennung des zweiten Netzwerkgeräts (410), und wobei die Nutzlast eine aggregierte Protokolldateneinheit der Medienzugriffssteuerung (MAC) (A-MPDU) umfasst, wobei die A-MPDU eine Vielzahl von MPDUs umfasst;
Empfangen (1202) einer Blockbestätigung (BA) (402) von dem zweiten Netzwerkgerät (410), wobei die BA (402) anzeigt, dass das zweite Netzwerkgerät (410) die Präambel erfolgreich dekodieren konnte, die Nutzlast jedoch nicht dekodieren konnte;
als Reaktion auf das Empfangen der BA (402), Aufrechterhalten eines BA-Fensters des ersten Netzwerkgeräts (400), wobei eine Größe des BA-Fensters eine Anzahl aufeinanderfolgender MPDUs angibt, die gemeinsam als ein einziger BA-Frame bestätigt werden dürfen; und
erneutes Senden (1203) der PPDU (401) an das zweite Netzwerkgerät (410) als Reaktion auf die BA (402).

15. Verfahren (1300) umfassend:
Empfangen (1301) einer Protokolldateneinheit der physikalischen Schicht (PHY) (PPDU) (401), von einem ersten Netzwerkgerät (400), wobei die PPDU (401) eine Präambel und eine Nutzlast umfasst, wobei die Präambel eine erste Angabe umfasst, die angibt, dass die Nutzlast an das zweite Gerät (410) adressiert ist, wobei die Angabe Informationen über einen Basisdienstsatz (BSS) umfasst, zu dem das zweite Netzwerkgerät (410) gehört, und/oder eine Kennung des zweiten Netzwerkgeräts (410), wobei die Nutzlast eine aggregierte Protokolldateneinheit der Medienzugriffssteuerung (MAC) (A-MPDU) umfasst, wobei die A-MPDU eine Vielzahl von MPDUs umfasst;
wenn die Präambel der PPDU (401) erfolgreich dekodiert wird und festgestellt wird, dass die Nutzlast an das zweite Netzwerkgerät (410) adressiert ist, die Dekodierung der Nutzlast jedoch fehlschlägt,
Senden (1302) einer Blockbestätigung, BA (402), an das erste Netzwerkgerät (400), wobei die BA (402) eingesetzt wird, um dem ersten Netzwerkgerät (400) zu signalisieren, dass das zweite Netzwerkgerät (410) die Präambel erfolgreich dekodieren konnte, die Nutzlast jedoch nicht dekodieren konnte,
wobei das Verfahren ferner umfasst: wenn die Vielzahl der MPDUs nicht erfolgreich dekodiert werden konnte, Bestimmen, dass die Nutzlast nicht erfolgreich dekodiert wurde; und Erzeugen der BA (402), die die eine oder die mehreren MPDUs angibt, die nicht erfolgreich dekodiert wurden.

16. Computerprogrammprodukt, umfassend einen Programmcode zum Ausführen des Verfahrens nach Anspruch 14 oder 15, wenn auf einem Prozessor implementiert.

## Revendications

1. Premier dispositif de réseau (400) pour un réseau sans fil, le premier dispositif de réseau (400) étant configuré pour :
envoyer une unité de données de protocole de couche physique, PHY, PPDU (401), à un deuxième dispositif de réseau (410), la PPDU (401) comprenant un préambule et une charge utile, le préambule comprenant une première indication indiquant que la charge utile est adressée au deuxième dispositif de réseau (410), la première indication dans le préambule comprenant des informations concernant un ensemble de service de base, BSS, auquel appartient le deuxième dispositif de réseau (410) et/ou un identifiant du deuxième dispositif de réseau (410), et la charge utile comprenant une unité de données de protocole de contrôle d'accès au support, MAC, agrégée, A-MPDU, l'A-MPDU comprenant une pluralité de MPDU ;
recevoir un acquittement de bloc, BA (402), en provenance du deuxième dispositif de réseau (410), le BA (402) indiquant que le deuxième dispositif de réseau (410) a réussi à décoder le préambule mais a échoué à décoder la charge utile ;
en réponse la réception du BA (402), maintenir une fenêtre de BA du premier dispositif de réseau (400), la taille de la fenêtre de BA indiquant un nombre de MPDU consécutives qui sont autorisées à être acquittées ensemble sous la forme d'une seule trame de BA ; et
renvoyer la PPDU (401) au deuxième dispositif de réseau (410) en réponse au BA (402).

2. Premier dispositif de réseau (400) selon la revendication 1, dans lequel le préambule comprend en outre une deuxième indication indiquant que la PPDU (401) provient du premier dispositif de réseau (400).

3. Premier dispositif de réseau (400) selon l'une des revendications 1 à 2, configuré en outre pour :
mettre à jour une commande de débit sur la base du BA (402).

4. Premier dispositif de réseau (400) selon l'une des revendications 1 à 3, dans lequel le premier dispositif de réseau (400) est un dispositif 802.11, et la PPDU (401) est une transmission à un seul utilisateur ou une transmission à plusieurs utilisateurs.

5. Premier dispositif de réseau (400) selon l'une des revendications 1 à 4, configuré pour : envoyer la PPDU (401), et/ou recevoir le BA (402), en utilisant une technologie d'accès multiple par répartition orthogonale de la fréquence, OFDMA, ou une technologie multi-utilisateurs à entrées multiples et sorties multiples, MU-MIMO.

6. Deuxième dispositif de réseau (410) configuré pour :
recevoir une unité de données de protocole de couche physique, PHY, PPDU (401) en provenance d'un premier dispositif de réseau (400), la PPDU (401) comprenant un préambule et une charge utile, le préambule comprenant une première indication indiquant que 1a charge utile est adressée au deuxième dispositif de réseau (410), l'indication comprenant des informations concernant un ensemble de services de base, BSS, auquel appartient le deuxième dispositif de réseau (410) et/ou un identifiant du deuxième dispositif de réseau (410), la charge utile comprenant unité de données de protocole de contrôle d'accès au support, MAC, agrégée, A-MPDU, l'A-MPDU comprenant une pluralité de MPDU ;
si le préambule de la PPDU (401) est décodé avec succès, et qu'il est détecté que la charge utile est adressée au deuxième dispositif de réseau (410), mais que la charge utile n'est pas décodée avec succès,
envoyer un acquittement de bloc, BA (402), au premier dispositif de réseau (400), le BA (402) étant utilisé pour indiquer au premier dispositif de réseau (400) que le deuxième dispositif de réseau (410) a réussi à décoder le préambule mais a échoué à décoder la charge utile,
et, lorsque la pluralité de MPDU n'est pas décodée avec succès, déterminer que la charge utile n'est pas décodée avec succès ; et générer le BA (402) qui indique la ou les MPDU qui n'ont pas été décodées avec succès.

7. Deuxième dispositif de réseau (410) selon la revendication 6, dans lequel la PPDU (401) est une transmission à un seul utilisateur depuis le premier dispositif de réseau (400), dans lequel, s'il est détecté que la charge utile est adressée au deuxième dispositif de réseau (410), mais qu'il n'y a aucune indication dans le préambule indiquant que la PPDU (401) provient du premier dispositif de réseau (400), le deuxième dispositif de réseau (410) est configuré pour :
diffuser le BA (402) à une pluralité de premiers dispositifs de réseau (400).

8. Deuxième dispositif de réseau (410) selon l'une des revendications 6 à 7, dans lequel le préambule comprend en outre une deuxième indication indiquant que la PPDU (401) provient du premier dispositif de réseau (400).

9. Deuxième dispositif de réseau (410) selon la revendication 8, configuré en outre pour :
obtenir une adresse MAC du premier dispositif de réseau (400), et
générer le BA (402) en utilisant l'adresse MAC du premier dispositif de réseau (400).

10. Deuxième dispositif de réseau (410) selon l'une des revendications 6 à 9, configuré en outre pour :
générer le BA (402) en utilisant une adresse MAC du deuxième dispositif de réseau (410).

11. Deuxième dispositif de réseau (410) selon l'une des revendications 6 à 10, dans lequel le deuxième dispositif de réseau (410) est un dispositif 802.11, et la PPDU (401) est une PPDU pour un seul utilisateur ou une PPDU pour plusieurs utilisateurs.

12. Deuxième dispositif de réseau (410) selon l'une des revendications 6 à 11, configuré en outre pour :
envoyer le BA (402), le BA (402) comprenant un identifiant de trafic multiple.

13. Deuxième dispositif de réseau (410) selon l'une des revendications 6 à 12, configuré en outre pour :
recevoir la PPDU (401), et/ou envoyer le BA (402), en utilisant une technologie d'accès multiple par répartition orthogonale de la fréquence, OFDMA, ou une technologie multi-utilisateurs à entrées multiples et sorties multiples, MU-MIMO.

14. Procédé (1200) comprenant :
l'envoi (1201) d'une unité de données de protocole de couche physique, PHY, PPDU (401) à un deuxième dispositif de réseau (410), la PPDU (401) comprenant un préambule et une charge utile, le préambule comprenant une première indication indiquant que la charge utile est adressée au deuxième dispositif de réseau (410), la première indication dans le préambule comprenant des informations concernant un ensemble de services de base, BSS, auquel appartient le deuxième dispositif de réseau (410) et/ou un identifiant du deuxième dispositif de réseau (410), et la charge utile comprenant une unité de données de protocole de contrôle d'accès au support, MAC, agrégée, A-MPDU, l'A-MPDU comprenant une pluralité de MPDU ;
la réception (1202) d'un acquittement de bloc, BA (402), en provenance du deuxième dispositif de réseau (410), le BA (402) indiquant que le deuxième dispositif de réseau (410) a réussi à décoder le préambule mais a échoué à décoder la charge utile ;
en réponse la réception du BA (402), le maintien d'une fenêtre de BA du premier dispositif de réseau (400), la taille de la fenêtre de BA indiquant un nombre de MPDU consécutives qui sont autorisées à être acquittées ensemble sous la forme d'une seule trame de BA ; et
le renvoi (1203) de la PPDU (401) au deuxième dispositif de réseau (410) en réponse au BA (402).

15. Procédé (1300) comprenant :
la réception (1301) d'une unité de données de protocole de couche physique, PHY, PPDU (401), en provenance d'un premier dispositif de réseau (400), la PPDU (401) comprenant un préambule et une charge utile, le préambule comprenant une première indication indiquant que la charge utile est adressée au deuxième dispositif (410), l'indication comprenant des informations concernant un ensemble de services de base, BSS, auquel appartient le deuxième dispositif de réseau (410) et/ou un identifiant du deuxième dispositif de réseau (410), la charge utile comprenant une unité de données de protocole de contrôle d'accès au support, MAC, agrégée, A-MPDU, l'A-MPDU comprenant une pluralité de MPDU ;
si le préambule de la PPDU (401) est décodé avec succès, et qu'il est détecté que la charge utile est adressée au deuxième dispositif de réseau (410), mais que la charge utile n'est pas décodée avec succès,
l'envoi (1302) d'un acquittement de bloc, BA, (402), au premier dispositif de réseau (400), le BA (402) étant utilisé pour indiquer au premier dispositif de réseau (400) que le deuxième dispositif de réseau (410) a réussi à décoder le préambule mais a échoué à décoder la charge utile,
le procédé comprenant en outre : lorsque la pluralité de MPDU n'est pas décodée avec succès, la détermination du fait que la charge utile n'est pas décodée avec succès ; et la génération du BA (402) pour indiquer la ou les MPDU qui n'ont pas été décodées avec succès.

16. Produit de programme informatique comprenant un code de programme pour l'exécution, lorsqu'il est mis en œuvre sur un processeur, du procédé selon la revendication 14 ou 15.
